# EUROPÄISCHE PATENTSCHRIFT

(11) **EP 1 808 068 B1**
(45) Veröffentlichungstag und Bekanntmachung des Hinweises auf die Patenterteilung: **14.09.2011**
(21) Anmeldenummer: 07000786.9
(22) Anmeldetag: 16.01.2007
(51) Int. Cl.: A01K 1/015

(54) **Tiereinstreu und Verfahren zu ihrer Herstellung**
Animal litter and method for its production
Litière pour animaux et méthode de production

(30) Priorität: 16.01.2006 DE 102006002187
(43) Veröffentlichungstag der Anmeldung: 18.07.2007
(73) Patentinhaber: J. Rettenmaier & Söhne GmbH + Co. KG, 73494 Rosenberg (DE)
(72) Erfinder: Brendle, Hans-Georg, 73479 Ellwangen (DE); Linsenmaier, Markus, 73433 Aalen (DE)
(74) Vertreter: GROSSE SCHUMACHER KNAUER VON HIRSCHHAUSEN

(56) Entgegenhaltungen:
- DE-A1- 3 732 807
- DE-A1- 4 327 159
- DE-C1- 19 543 311
- US-A- 5 609 123

## Beschreibung

### Gebiet der Erfindung

Die Erfindung betrifft eine Tiereinstreu und ein Verfahren zu ihrer Herstellung nach dem Oberbegriff des Anspruchs 1 bzw. 7.

### Stand der Technik

Eine derartige Tiereinstreu ist beispielsweise aus der DE 195 43 311 C1 bekannt. Sie umfasst größtenteils Holzpartikel, beispielsweise kleine Holzspäne, die zusammen mit weiteren Bestandteilen, z.B. einem organischen Verdickungsmittel, zu Formkörpern verpresst und anschließend durchgängig zu Bruchkom zerkleinert werden. Die Granulatkörner sollen für eine konvexe Form eine größte Abmessung im Bereich von 2 mm bis 5 mm und ein Verhältnis zwischen größter und kleinster Abmessung unterhalb von 5:1 aufweisen. Durch die konvexe Form sollen faserförmige Granulatanteile, die wie ein Pulver am Fell des Tiers anhaften würden, abgetrennt werden.

Die so aufgebrochenen Granulatkörner weisen jedoch - wie in Bild1 beispielhaft gezeigt - eine rauhe Oberfläche oder zumindest rauhe Oberflächenabschnitte auf. Dies umso mehr, wenn sie aus den Formkörpern durch Zerdrücken hergestellt werden, was sehr kostengünstig möglich ist. Rauhe Oberflächen begünstigen die Anhaftung der Granulatkörner am Fell des Tiers, auch wenn die Granulatkörner konvex geformt sind. Die Tiereinstreu wird daher in wesentlichen Mengen vom Tier mitgenommen, wenn dieses sich von der Toilette entfernt. Derart mitgenommene Tiereinstreu stellt, da sie im für das Tier zugänglichen Bereich der Wohnung des Tierhalters verteilt wird, ein Reinigungs- und Hygieneproblem dar.

Die DE 195 43 311 C1 erwähnt ferner die Möglichkeit, unter Verzicht auf den Schritt des Zerkleinerns stranggepresste Formkörper direkt als Tiereinstreu zu verwenden, wenn es sich um Pellets mit 5 mm bis 8 mm Durchmesser und etwa 10 mm bis 15 mm Länge handelt.

Die bekannten Pellets weisen im Vergleich zu den zerdrückten Granulatkörnern eine verringerte Klumpfähigkeit auf. Die verringerte Klumpfähigkeit resultiert aus der unzureichend kleinen Oberfläche und der unzureichenden Anzahl von Kontaktpunkten zwischen den Pellets. Bei Benetzung der Pellets durch das Tier wird zwar die Feuchtigkeit in die einzelnen Pellets aufgenommen. Allerdings haften die Pellets nur schlecht aneinander. Die sich bildenden Klumpen sind daher instabil und neigen zum Auseinanderfallen. Dies erschwert die Reinigung der Toilette. Zudem ergibt sich keine deutliche Trennung zwischen verbrauchter und unverbrauchter Tiereinstreu, da Feuchtigkeit durch die aufgebrochenen Klumpen in die darunter befindlichen Schichten unverbrauchter Tiereinstreu punktuell eindringen kann.

Die DE 195 43 311 C1 befasst sich mit der Problematik des Anhaftens nicht. Granulate und Pellets, die weder pulver-, noch faserförmig sind, haften für die Zwecke der DE 195 43 311 C1 ausreichend schlecht am Tier. Dementsprechend sind weitere Informationen über den Einfluss der Form, der Oberflächenbeschaffenheit, des Gewichts und der Herstellungsbedingungen auf das Haftungsverhalten nicht angegeben. Auch die Wechselwirkung dieser Faktoren in Bezug auf die Klumpfähigkeit bei möglichst geringer Menge klumpend wirkenden Additivs wird in der DE 195 43 311 C1 nicht erkannt. Messungen haben ein Schüttgewicht von etwa 460 g/l sowie ein Einzelgewicht von etwa 0,028 g pro Granulat oder Pellet ergeben.

Die DE 37 32 807 A1 beschreibt eine Tiereinstreu, insbesondere Katzenstreu, bei dem Strohmehl zu Briketts verpresst und die Briketts zu unregelmäßigen Bruchstücken zerteilt werden.

Die DE 43 27 159 A1 beschreibt eine Heimtiereinstreu mit einem Schüttgewicht zwischen 400 und 800 Gramm pro Liter.

Die US 5 609 123 A beschreibt eine Tiereinstreu mit einer Partikelgröße von 90% unterhalb 0,2 mm.

### Beschreibung der Erfindung

Der Erfindung liegt daher die Aufgabe zu Grunde, eine Tiereinstreu sowie ein Verfahren zu ihrer Herstellung nach dem Oberbegriff des Anspruchs 1 bzw. 7 zu schaffen, die bei kostengünstiger Herstellung eine verringerte Haftung am Fell und an den Pfoten eines Tiers bei guter Klumpfähigkeit aufweisen.

Diese Aufgabe wird entsprechend den Merkmalen der Ansprüche 1 bzw. 7 gelöst.

Hierdurch wird eine Tiereinstreu mit Presslingen geschaffen, die aus einem Feuchtigkeit absorbierenden und festhaltenden Material, inbesondere auf Basis von Holzspänen, sowie einem klumpend wirkenden Additiv und gegebenenfalls weiteren Komponenten durch Pressen gebildet sind. Die Presslinge sind dabei unaufgebrochen, um rauhe O-berflächenabschnitte zu vermeiden. Sie weisen vielmehr durch Verdichten unter Druck gebildete, im wesentlichen zylinderförmige, pressformglatte und dabei poröse Mantel-Oberflächen auf. An derartig pressformglatten Oberflächen haftet Tierhaar nur sehr schwach und die Porosität stellt trotz der glatten Oberflächen dennoch eine gute Flüssigkeitsaufnahme ins Innere der Presslinge sicher. Die Dicke der Presslinge liegt im Bereich zwischen 3 und 4,8 mm, was zusammen mit einem durchschnitttlichen Einzelgewicht von nicht unter 0,05 g eine Verhakung im Fell des Tiers verhindert und ausreichend Oberflächen kontakt zwischen Presslingen sicherstellt, der für eine Klumpenbildung erforderlich ist.

Bei dieser Kombination von Eigenschaften hinsichtlich Form, Oberflächengestaltung, Gewicht und Abmessungen ist bei kostengünstiger Herstellung eine erheblich verringerte Haftung am Fell und an den Pfoten eines Tiers bei guter Klumpfähigkeit zu beobachten. Das relativ hohe Gewicht verringert zudem den Verunreinigungsradius, da die Presslinge - soweit sie überhaupt anhaften - sich schneller aus dem Tierhaar lösen.

Die Presslinge sind vorzugsweise im wesentlichen kreiszylindrisch. Eine derartige Form ist einfach durch Strangpressen herstellbar und weist kaum Ecken und Kanten auf, mit denen sie sich im Fell eines Tiers verfangen könnte.

Der Durchmesser der Presslinge liegt möglichst zwischen 3,5 und 4,5 mm. Bei einem Durchmesser von etwa 4 mm wurde im Vergleich zu dickeren oder dünneren Presslingen eine erheblich verringerte Anhaftung im Fell bei dennoch ausreichend viel Kontaktoberfläche für eine gute Klumpenbildung festgestellt.

Erfindungsgemäß beträgt die Länge der Presslinge zwischen 5 und 30 mm. Längere Presslinge neigen zum Bruch, wodurch rauhe Oberflächen entstehen, während kürzere Presslinge einfacher in langem Tierhaar anhaften. Zudem weisen kurze Presslinge verhältnismäßig weniger pressformglatte, Oberfläche als Stirnfläche auf, welche eine höhere Rauhigkeit aufweist und bei ungünstigem Oberflächenverhältnis in einer stärkeren Anhaftung resultiert.

Eine Schüttung von erfindungsmäßigen Preßlingen ist in Bild 2 beispielhaft wiedergegeben. Unter- und Überkorn sind z.B. durch Sieben entfernt.

Das Einzelgewicht des Hauptteils, z.B. 90 Gew,-%, der Presslinge liegt vorzugsweise zwischen 0,05 und 0,5 g. Dieser Bereich ist optimal hinsichtlich der Anhaftung am Tierhaar und der Herstellbarkeit.

Die Länge der Holzspäne beträgt vorzugsweise nicht mehr als 2 mm. Dies verhindert das Hervorstehen langer Holzspäne aus den pressformglatten Oberflächen und den Stirnseiten.

Das Schüttgewicht kann zwischen 500 und 600 g/l und vorzugsweise etwa 540 g/l betragen. Das Schüttgewicht spezifiziert den Anteil an Hohlräumen und Kontakten zwischen den Presslingen der in die Toilette eingestreuten Tiereinstreu. Bei dem angegebenen Bereich stellt sich eine gute Klumpfähigkeit ein.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft und schematisch - Ausführungsbeispiele der Erfindung dargestellt sind.

### Figurenkurzbeschreibung

- Fig. 1: zeigt einen (schematisiert dargestellten) Pressling;
- Fig. 2 und 3: zeigen den Pressling aus Fig. 1 im Längs- bzw. Querschnitt;
- Bild 2: zeigt beispielhaft eine Schüttung von Preßlingen, die eine erfindungsgemäße Tiereinstreu für z.B. Katzen darstellt.

### Beschreibung von Ausführungsbeispielen der Erfindung

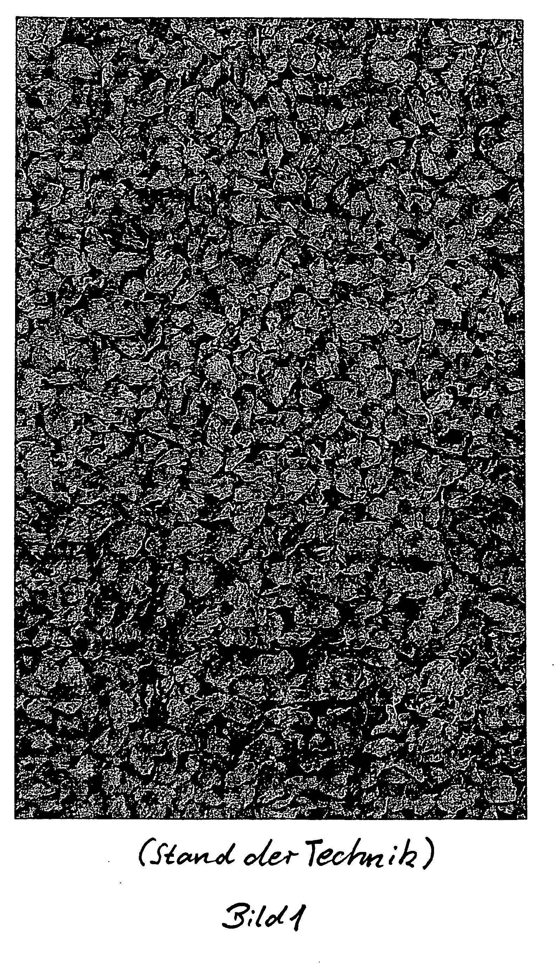

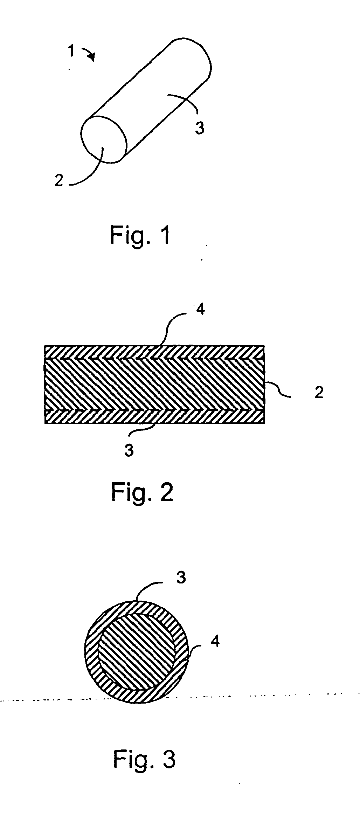

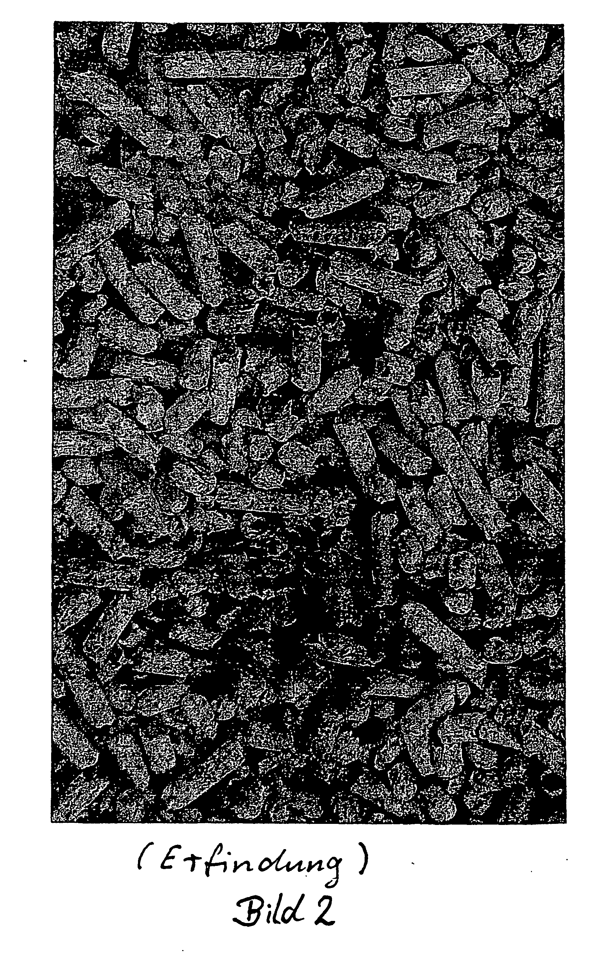

Der in Fig. 1 bis 3 dargestellte Pressling 1 ist kreiszylindrisch und weist Stirnseiten 2 sowie eine pressformglatte, poröse Mantel-Oberfläche 3 auf.

Der Durchmesser des Presslings 1 beträgt im Idealfall etwa 4 mm bei einer Länge von 5 bis 30 mm, vorzugsweise etwa 20 mm, und einem Einzelgewicht nicht unter 0,05 g und vorzugsweise nicht über 0,5 g.

Die Mantel-Oberfläche 3 des Presslings 1 ist verhomt, d.h. gleichzeitig pressformglatt und zumindest im Bereich einer oberflächennahen Randzone 4 ausreichend porös, um eine gute Saugfähigkeit zu erhalten. Die Porösität kann dabei so eingestellt werden, dass ein Liter Tiereinstreu bei 20° C Zimmertemperatur und einer Standard-Luftfeuchtigkeit 200 ml zimmerwarmes Wasser mit einer Sauggeschwindigkeit von zumindest 30 I/h, vorzugsweise wenigstens 60 I/h aufnehmen kann. Die Porösität kann durch geeignete Wahl der Parameter Druck, Temperatur und Presskanaloberfläche bei der Herstellung des Presslings 1 beeinflusst werden.

Die Form des Presslings 1 ist nicht auf einen Kreiszylinder beschränkt. Beispielsweise kann der Pressling 1 quaderförmig oder eiförmig sein.

Die Tiereinstreu umfasst eine erhebliche Menge des Presslings 1. Vorzugsweise sind höchstens 10 Gew.-% der Presslinge 1 außerhalb des beanspruchten Bereichs.

Das Schüttgewicht der Tiereinstreu liegt im Bereich zwischen 500 und 600 g/l und vorzugsweise bei etwa 540 g/l.

Zur Herstellung des Presslings 1 kann eine Trommelpresse oder dergleichen verwendet werden. Darin wird Ausgangsmaterial mit Holzspänen, einem klumpend wirkenden Additiv und gegebenenfalls weiteren Komponenten mittels einer umlaufenden Trommel durch Presskanäle gedrückt. Die Presskanäle sind zwischen 20 und 30 mm lang, zweckmäßigerweise hohlzylindrisch mit einem Durchmesser zwischen 3,2 und 4,8 mm und vorzugsweise zwischen 3,5 und 4,5 mm und können benachbart auf einem Kreisscheibenabschnitt münden. Vorzugsweise wird zum Ablängen des stranggepressten Formlings zu Presslingen 1 eine um einen Kreisscheibenmittelpunkt rotierende Abstreif- oder Schneidvorrichtung verwendet.

### Bezugszeichenliste

- 1: Pressling
- 2: Stirnseite
- 3: Mantel-Oberfläche
- 4: Randzone

## Patentansprüche

1. Klumpende Tiereinstreu aus unaufagebrochenen, zylinderförrformigen Presslingen (1), die aus einem Feuchtigkeit absorbierenden und festhaltenden Material auf Basis von Holzspänen sowie einem klumpend wir kenden Additiv und gegebenenfalls weiteren Komponenten durch Pressen gebildet sind, **dadurch gekennzeichnet, dass** die Presslinge (1) durch Verdichten unter Druck gebildete pressformglatte, poröse Mantel-Oberflächen (3) sowie eine Dicke von 3 bis 4,8 mm und ein durchschnittliches Einzelgewicht von nicht unter 0,05 g und eine Länge zwischen 5 und 30 mm aufweisen.

2. Tiereinstreu nach Anspruch 1, **dadurch gekennzeichnet, dass** die Presslinge (1) kreiszylindrisch sind.

3. Tiereinstreu nach Anspruch 1 oder 2, **dadurch gekennzeichnet, dass** die Presslinge (1) einer Dicke zwischen 3,5 und 4,5 mm und vorzugsweise 4 mm aufweisen.

4. Tiereinstreu nach einem der Ansprüche 1 bis 3, **dadurch gekennzeichnet, dass** 90 Gew.-% der Presslinge (1) ein Einzelgewicht zwischen 0,05 und 0,5g aufweisen.

5. Tiereinstreu nach einem der Ansprüche 1 bis 4, **dadurch gekennzeichnet, dass** die Länge der Holzspäne 2 mm oder kürzer ist.

6. Tiereinstreu nach einem der Ansprüche 1 bis 65, **dadurch gekennzeichnet, dass** das Schüttgewicht zwischen 500 und 600 g/l und vorzugsweise etwa 540 g/l beträgt.

7. Verfahren zum Herstellen einer klumpenden Tiereinstreu nach einem der Ansprüche 1 bis 7, bei dem ein Feuchtigkeit absorbierendes und festhaltendes Material auf Basis von Holzspänen mit einem klumpend wirkenden Additiv und gegebenenfalls weiteren Komponenten unter Ausbilden unaufgebrochener, zylindrischer Presslinge (1) durch einen Presskanal gedrückt wird, **dadurch gekennzeichnet, dass** das Material unter Ausbilden pressformglatter, poröser Mantel-Oberflächen (3) unter Druck in einem Presskanal verdichtet und zum Ausbilden einzelner unaufgebrochener Presslinge (1) presskanalendseitig derart abgelängt wird, dass die einzelnen Presslinge (1) bei einer Dicke von 3 mm bis 4,8 mm ein durchschnittliches Einzelgewicht von nicht unter 0,05 g und eine länge zwischen 5 und 30 mm aufweisen.

8. Verfahren nach Anspruch 7, **dadurch gekennzeichnet, dass** ein hohlzylindrischer Presskanal verwendet wird.

9. Verfahren nach Anspruch 7 oder 8, **dadurch gekennzeichnet, dass** ein Presskanal mit einem Durchmesser zwischen 3,2 und 4,8 mm und vorzugsweise zwischen 3,5 und 4,5 mm verwendet wird.

10. Verfahren nach einem der Ansprüche 7 bis 9, **dadurch gekennzeichnet, dass** zum Ablängen eine Abstreif- oder Schneldvorrichtung verwendet wird.

11. Verfahren nach einem der Ansprüche 7 bis 10, **dadurch gekennzeichnet, dass** der Presskanal zwischen 20 und 30 mm lang ist.

## Claims

1. An agglomerating animal litter of non broken-up, cylindrical pellets (1), which are formed from a material which absorbs and retains moisture, based on wood chips, and from an additive acting in an agglomerating manner and if applicable from further components by pressing, **characterized in that** the pellets (1) have squeeze-moulding smooth porous casing surfaces (3) formed by compacting under pressure, and a thickness of 3 to 4.8 mm and an average individual weight of not less than 0.05 g and a length of between 5 and 30 mm.

2. The animal litter according to Claim 1, **characterized in that** the pellets (1) are circular-cylindrical.

3. The animal litter according to Claim 1 or 2, **characterized in that** the pellets (1) have a thickness of between 3.5 and 4.5 mm and preferably 4 mm.

4. The animal litter according to one of Claims 1 to 3, **characterized in that** 90% by weight of the pellets (1) have an individual weight of between 0.05 and 0.5 g.

5. The animal litter according to one of Claims 1 to 4, **characterized in that** the length of the wood chips is 2 mm or shorter.

6. The animal litter according to one of Claims 1 to 5, **characterized in that** the bulk weight is between 500 and 600 g/l and preferably approximately 540 g/l.

7. A method for the production of an agglomerating animal litter according to one of Claims 1 to 7, in which a material which absorbs and retains moisture, based on wood chips, with an additive acting in an agglomerating manner and if applicable with further components, is pressed through a pressing duct with the formation of non broken-up, cylindrical pellets (1), **characterized in that** the material is compacted under pressure in a pressing duct, with the formation of squeeze-moulding smooth, porous casing surfaces (3), and for the formation of individual non broken-up pellets (1) is cut to length on the end side of the pressing duct such that the individual pellets (1) with a thickness of 3 mm to 4.8 mm have an average individual weight of not less than 0.05 g and a length of between 5 and 30 mm.

8. The method according to Claim 7, **characterized in that** a hollow cylindrical pressing duct is used.

9. The method according to Claim 7 or 8, **characterized in that** a pressing duct with a diameter of between 3.2 and 4.8 mm and preferably between 3.5 and 4.5 mm is used.

10. The method according to one of Claims 7 to 9, **characterized in that** a stripping or cutting device is used for cutting to length.

11. The method according to one of Claims 7 to 10, **characterized in that** the pressing duct is between 20 and 30 mm long.

## Revendications

1. Litière agglomérante pour animaux en pastilles (1) cylindriques non fracturées, qui sont formées par compression d'une matière absorbant et retenant l'humidité, sur base de copeaux de bois et d'un additif agglomérant et le cas échéant d'autres composants, **caractérisée en ce que** suite à un compactage sous pression, les pastilles (1) présentent des surfaces d'enveloppe (3) poreuses, de forme lisse, ainsi qu'une épaisseur comprise entre 3 et 4,8 mm et un poids individuel moyen qui n'est pas inférieur à 0,05 g et une longueur entre 5 et 30 mm.

2. Litière pour animaux selon la revendication 1, **caractérisée en ce que** les pastilles (1) sont cylindriques circulaires.

3. Litière pour animaux selon la revendication 1 ou 2, **caractérisée en ce que** les pastilles (1) présentent une épaisseur comprise entre 3,5 et 4,5 mm et de préférence de 4 mm.

4. Litière pour animaux selon l'une quelconque des revendications 1 à 3, **caractérisée en ce que** 90 % en poids des pastilles (1) présentent un poids individuel compris entre 0,05 et 0,5 g.

5. Litière pour animaux selon l'une quelconque des revendications 1 à 4, **caractérisé en ce que** la longueur des copeaux de bois est de 2 mm ou inférieure.

6. Litière pour animaux selon l'une quelconque des revendications 1 à 5, **caractérisée en ce que** le poids en vrac est compris entre 500 et 600 g/l et est de préférence d'environ 540g/l.

7. Procédé de fabrication d'une litière agglomérante pour animaux selon l'une quelconque des revendications 1 à 7, dans lequel on presse à travers un conduit presseur une matière absorbant et retenant l'humidité sur base de copeaux de bois avec un additif à action agglomérante et le cas échéant avec des composants supplémentaires, en formant des pastilles cylindriques non fracturées, **caractérisé en ce qu'**on compacte la matière en formant des surfaces d'enveloppe (3) poreuses lisses moulées par compression sous pression dans un conduit presseur et **en ce que** pour la création de pastilles (1) individuelles non fracturées, on la tronçonne côté conduit presseur de sorte que, pour une épaisseur de 3 mm à 4,8 mm, les pastilles (1) individuelles présentent un poids individuel moyen qui n'est pas inférieur à 0,05 g et une longueur comprise entre 5 et 30 mm.

8. Procédé selon la revendication 7, **caractérisé en ce qu'**on utilise un conduit presseur cylindrique creux.

9. Procédé selon la revendication 7 ou 8, **caractérisé en ce qu'**on utilise un conduit presseur d'un diamètre compris entre 3,2 et 4,8 mm et de préférence compris entre 3,5 et 4,5 mm.

10. Procédé selon l'une quelconque des revendications 7 à 9, **caractérisé en ce que** pour le tronçonnement, on utilise un dispositif de stripage ou de découpe.

11. Procédé selon l'une quelconque des revendications 7 à 10, **caractérisé en ce que** le conduit presseur présente une longueur comprise entre 20 et 30 mm.
